(19) Europäisches Patentamt
European Patent Office
Office européen des brevets

(11) **EP 0 566 309 B1**

(12) **EUROPEAN PATENT SPECIFICATION**

(45) Date of publication and mention
of the grant of the patent:
**17.06.1998 Bulletin 1998/25**

(51) Int Cl.⁶: **H04N 5/262**, G06T 3/00

(21) Application number: **93302739.3**

(22) Date of filing: **07.04.1993**

(54) **Image transforming apparatus**

Vorrichtung zur Bildtransformation

Appareil de transformation d'image

(84) Designated Contracting States:
**DE FR GB**

(30) Priority: **11.04.1992 JP 118402/92**

(43) Date of publication of application:
**20.10.1993 Bulletin 1993/42**

(73) Proprietor: **SONY CORPORATION**
**Tokyo (JP)**

(72) Inventors:
• **Kurashige, Masafumi, c/o Patents Div.,**
**Sony Corp.**
**Tokyo 141 (JP)**
• **Fukushima, Shinichi, c/o Patents Div.,**
**Sony Corp.**
**Tokyo 141 (JP)**
• **Nakao, Ayumi, c/o Patents Div., Sony Corp.**
**Tokyo 141 (JP)**

(74) Representative: **Cotter, Ivan John et al**
**D. YOUNG & CO.**
**21 New Fetter Lane**
**London EC4A 1DA (GB)**

(56) References cited:
**EP-A- 0 437 074**

• **PATENT ABSTRACTS OF JAPAN vol. 16, no. 579
(E-1299)18 December 1992 & JP-A-4 227 172
( NEC CORP. ) 17 August 1992**
• **PATENT ABSTRACTS OF JAPAN vol. 13, no. 468
(E-834)23 October 1989 & JP-A-1 183 277 ( NEC
CORP. ) 21 July 1989**
• **PATENT ABSTRACTS OF JAPAN vol. 11, no. 27
(E-474)27 January 1987 & JP-A-61 196 681
( SONY CORP. ) 30 August 1986**

## Description

This invention relates to image transforming or converting apparatus, which, for example, can be used to apply a special effect to television signals.

A special effect system for applying a special effect to television signals has been proposed, for example as disclosed in US Patent No. US-A-4 965 844, in which a television signal is digital-signal-processed to display an image on a display as if the input image had been pasted up (hereinafter referred to as "mapping") on a three-dimensional curved surface (for instance, a cylinder or a wine glass, etc., hereinafter referred to as "shape").

In a method according to this type of image transform, the input image is first divided into blocks having a predetermined size, and the image data of each block are stored progressively in predetermined addresses of a memory according to predetermined write address data.

At the same time, predetermined calculation is executed with respect to the addresses of stored input image data prior to transform based on the transform-input-data inputted by an operator using separate input means, thus obtaining the read addresses of the input image data stored in the memory.

The read address is calculated so that an output image which looks as if the inputted image has been mapped onto a predetermined shape can be obtained when the output image is assembled with raster scan, and in accordance with this read address, the image data of a block stored in a predetermined address in the memory is read out. Thus, a two-dimensional plane output image, which looks as if the input picture has been mapped onto a predetermined shape, can be outputted.

In the image transform, by enabling the formation of a shape such as a ripple spreading over a water surface, it would be more convenient to map various input images.

At this time, if the shape can be formed such that the amplitude becomes smaller as it goes farther, a more realistic image can be synthesized.

In view of the foregoing, an object of this invention is to provide a image transforming apparatus in which a wavering or ripple-like image or the like, such as an image of a ripple spreading over a water surface, can be synthesised by a simple procedure.

European Patent Application No EP-A-0437074 discloses a special effects apparatus using polar image coordinates that includes a look-up table that may be programmed with predetermined X and Y coordinates that define a ripple. However, the ripple produced by this arrangement may only be modified by reprogramming the look-up table which is inconvenient and time consuming.

According to one aspect of the invention, there is provided an image transforming apparatus for transforming an input image into an output image such as a ripple or the like, the ripple having an amplitude and a wavelength, the apparatus being characterised by: means for setting a central reference position of the ripple; means for setting an attenuation range defining a radial portion of said ripple over which the amplitude of the ripple is to be attenuated, said attenuation range being defined with respect to said central reference position; means for setting an attenuation value, said attenuation value varying throughout said attenuation range in accordance with the distance from the central reference position, and for weighting an offset value with the attenuation value, said offset value having a predetermined cyclic function varying in accordance with the distance from the central reference position; means for generating three-dimensional shape data representing the ripple, said shape data being based on transform address data produced by adding address data of the input image to the offset value; and mapping means for mapping said input image onto said ripple such that the amplitude of said ripple is attenuated over the attenuation range in accordance with said attenuation value.

Preferably, said attenuation setting means sets said attenuation value to a value "1" and weights said offset value with said unitary attenuation value such that said mapping means maps said input image onto a ripple having a constant amplitude throughout said attenuation range.

In another aspect, the attenuation range setting means sets said attenuation range to an annular portion of said input image, said attenuation value setting means sequentially switches the phase of said offset value for each field or frame of said input image and said mapping means maps said input image onto said ripple such that only the annular portion of said output image is rippled.

In another aspect, the attenuation range setting means sets said attenuation range to a constant value, said generating means generates said three dimensional shape data by moving sequentially said central reference position for each frame or field of said input image and said mapping means maps said input image onto said ripple such that movement of said ripple is synchronised with the movement of said central reference position.

In another aspect, the central reference position setting means sets said central reference position to the centre of said input image, said attenuation range setting means sets said attenuation range to the whole area of said input image and said mapping means maps said input image onto said ripple such that the amplitude of the ripple increases or decreases as the ripple approaches or retreats from, respectively, the central reference position.

In another aspect, the apparatus may comprise switching means for switching between a first operation mode and a second operation mode wherein: in said first operation mode, said attenuation value setting means weights said offset value with an attenuation value that varies throughout said attenuation range in accordance with the distance from the central reference position and said mapping means maps said input image onto said ripple such that the amplitude of the ripple changes gradually in accordance with the distance from the central reference position, and in said second operation mode, said attenuation value setting means weights said offset value with an attenuation value that is set to "1" and said mapping means maps said input image onto said ripple such that the amplitude of the ripple is constant throughout the attenuation range.

In the above aspects, it is preferred that the mapping means comprises an image storing memory (2) for storing said input image, a means for generating an inverse mapping function (6) based on said three dimensional shape data and a means for reading said input image from each address position in the input image memory corresponding to each address position of the ripple in accordance with the inverse mapping function and for outputting the input image.

The invention will now be further described, by way of illustrative and non-limiting example, with reference to the accompanying drawings, in which like parts are designated by like reference numerals or characters throughout, and in which:

Fig. 1 is a block diagram showing one embodiment of the image transforming apparatus according to this invention;
Fig. 2 is a schematic view showing the wave having no attenuation;
Fig. 3 is a schematic view illustrating the output image of the X-Y plane of the wave having no attenuation;
Fig. 4 is a characteristic curve diagram for the explanation of the process weight-processing to the offset value changing like a cyclic function;
Fig. 5 is a schematic view showing the wave having more attenuation as it goes farther;
Fig. 6 is a schematic view illustrating the output image of the X-Y plane of the wave having more attenuation as it goes farther;
Fig. 7 is a schematic view showing the wave oscillating only in a specific position;
Fig. 8 is a schematic view illustrating the output image of the X-Y plane of the wave oscillating only in a specific position;
Fig. 9 is a schematic view showing the initial state of the wave progressing with undetermined width (progressive wave);
Fig. 10 is a schematic view illustrating the output image of the X-Y plane of the initial state of the wave progressing with undetermined width (progressive wave);
Fig. 11 is a schematic view showing the wave progressing with undetermined width (progressive wave) after passage of predetermined time;
Fig. 12 is a schematic view illustrating the output image of the X-Y plane of the wave progressing with undetermined width (progressive wave) after passage of predetermined time;
Fig. 13 is a characteristic curve diagram for the explanation of the case where the offset value is produced such as to change the value like a triangular wave; and
Fig. 14 is a characteristic curve diagram for the explanation of the case where the offset value changing like a sine-wave is further transformed into an absolute value and the offset value is produced.

Preferred embodiments of this invention will be described with reference to the accompanying drawings:

(1) Image transforming apparatus

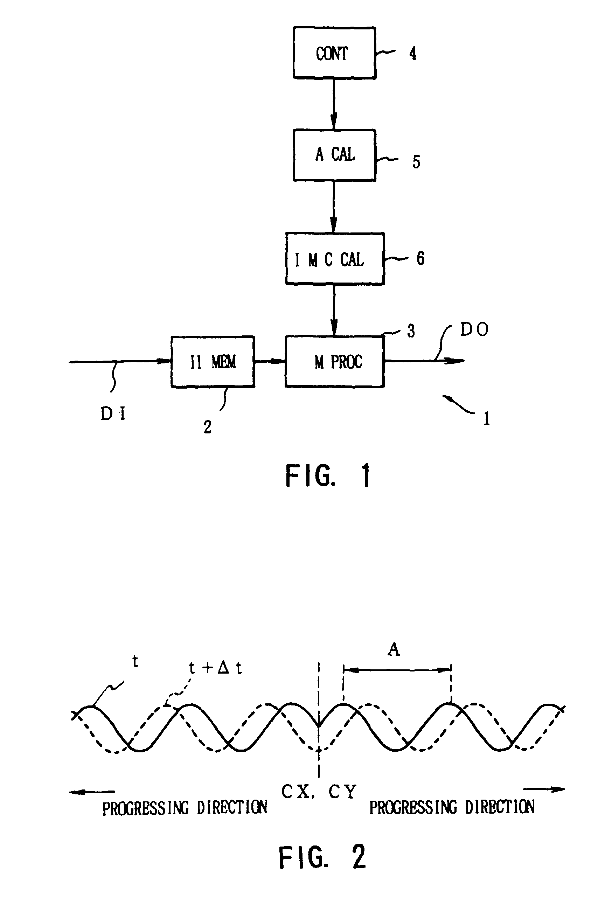

In Fig. 1, a reference numeral 1 shows generally an image transforming apparatus embodying this invention, and the input image data DI inputted sequentially is stored in the input image memory 2, and is read out at a predetermined timing and is supplied to a mapping processing circuit 3.

Further, in the image transforming apparatus 1, when the operator manipulates the controller 4 and the operation mode is selected, the parameters to be inputted are accepted depending on the operation mode, and the shape demanded by the operator is produced in accordance with these parameters.

Hence, in the address calculating part 5, the address of the input image data DI is address transformed by the predetermined transform function in accordance with the parameter to be inputted via the controller 4, so that the three-dimensional shape is produced.

In accordance with the address (hereinafter, referring to as "transform address") produced in this process, in an inverse mapping coefficient calculating part 6, an inverse mapping coefficient which is necessary for the mapping processing is produced and supplied to the mapping processing circuit 3.

After this process, in the mapping processing circuit 3, the input image data DI to be inputted from the input image memory 2 is mapping processed in accordance with the inverse mapping coefficient. Thus, a two-dimensional flat output image data DO, that the input image data DI is mapped on the surface of the desired shape, can be obtained.

That is, the mapping processing circuit 3 reads the two-dimensional image data from each address position of the input image memory corresponding to each address position on the shape on the basis of the inverse mapping function and outputs the data. Moreover, this mapping process itself is known, for example from US Patent No. US-A-5 070 465.

(2) Production of shape

In the address calculating part 5, the input image address (x, y, z) is calculated by following arithmetic operation:

$$X = R \cdot \frac{x\text{-}CX}{dist} \cdot \cos (A \cdot dist+P) \cdot At + x \tag{1}$$

$$Y = R \cdot \frac{y\text{-}CY}{dist} \cdot \cos(A \cdot dist+P) \cdot At + y \tag{2}$$

$$Z = -R \cdot \sin(A \cdot dist+P) \cdot At + z \tag{3}$$

Thus, the transforming address (X, Y, Z) is produced.

"CX" and "CY" represent the X and Y coordinates of the center position of the ripple, "R" represents the maximum amplitude of the wave, and "A" represents wavelength. Furthermore, "P" represents the phase of the wave, and "dist" and "At" are represented by following equations:

$$At = \exp\left\{ - \left\{ \frac{dist\text{-}Rc}{Rr} \right\}^2 \right\} \qquad\qquad \ldots (4)$$

$$dist = [(x\text{-}CX)^2 + (y\text{-}CY)^2 ]^{1/2} \tag{5}$$

"Rc" represents the center position of the passing wave and is defined by the distance from the wave center CX and CY. "Rr" represents the range of the passing wave, that is, the range of generation of wave is represented on the basis of the center position Rc the wave passes.

Hence, the address calculating part 5 executes the arithmetic processing of equations (1) to (5) in accordance with the parameters CX to Rc specified via the controller 4, thus the desired shape of wave is produced.

(2-1) Production of wave having no attenuation

Inputting the ripple command via the controller 4 by operator, in the image transforming apparatus 1, switches to the wave production mode, and the display of this wave surface production mode is displayed.

By the operator's selection of the ripple-on menu, the image transforming apparatus 1, is switched to the 3D wave production mode changing the wave at real time, and at this time if the attenuation-on menu is selected, an animation is produced to make the ripple attenuate.

In contrast, in the case when the menu of attenuation-on is not selected, the address calculating part 5 sets the parameter At to a value "1" and produces the shape.

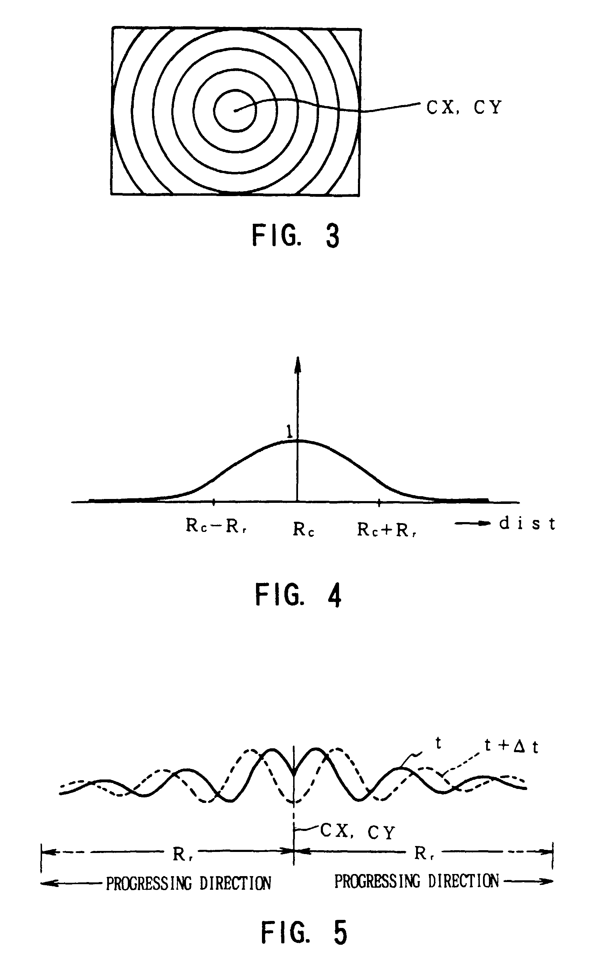

Namely, as shown in Figs. 2 and 3, in the equations (1) to (3), in the equation that the parameter At is set to a value "1", the first term value is changed like a cyclic function as departing from the center CX and CY in each X and Y directions, and the address of the input image data DI is added to the first term value so that the input address is offset by the offset value which is determined by the first term value, and the output address is generated. Thus, a shape which looks like a ripple spreading over the whole display from the center CX and CY can be produced.

Accordingly, the mapping processing is executed using this transforming address so as to produce the output image data DO which looks like a spreading ripple from the input image data DI.

At this time, the address calculating part 5 detects the phase P for each field from the wave frequency inputted by the operator, and the phase P is substituted to equations (1) to (3) and the arithmetic operation is repeated so that the shape changing in wave phase for each field is produced.

Therefore, in the image transforming apparatus 1, the input image data DI is repeatedly mapping processed to this shape for each field so that the output image data DO, which looks like a ripple spreading over the whole display from the center CX and CY designated by operator, is produced from the input image data DI.

At this time in the image transforming apparatus 1, if the change of phase P is set to an opposite direction, the shape is produced in a way that the wave moves toward the center CX and CY from the circumference.

Further, in this embodiment, the controller 4 is capable of setting the wavelength ratio of X and Y direction so that the address calculating part 5 produces the shape in accordance with the set value. For instance, in the case that the ratio is set to the value "1", the parameters of equations (1) and (2) are changed and the shape is produced in a way that the ripple spreads in a concentric circle. In contrast with this, in the case that the ratio is set a value other than "1", the shape is produced in a way that the wave spreads like an ellipse in accordance with the set value.

That is, the address calculating part 5 executes the following arithmetic operation:

$$A = \frac{2\pi}{L} \tag{6}$$

and sets the wavelength A with respect to the wavelength which is represented by distance on the display and has been inputted from operator. Then, the wavelength A to be substituted in equations (1) and (2) is switched in accordance with this ratio set by operator.

Hence, the image transforming apparatus 1 can produce an animation that looks like a ripple spreading like an ellipse desired by operator.

Further, the image transforming apparatus 1, by having the angle changed and the inverse mapping coefficient changed, is able to show the spreading ripple from a desired angle.

(2-2) Production of wave having attenuation

On the contrary, if the operator selects the menu of attenuation-on, the address calculating part 5 executes the arithmetic operations of equations (4) and (5) with the inputted parameters. As a result, the arithmetic operations of equations (1) to (3) are performed using the obtained parameter At.

As shown in Fig. 4, in the equation (4), when the parameter "dist" is a value Rc, the value "1" is obtained as the calculated result, and it reduces to the value "0" as the parameter value "dist" goes away from the value Rc. Therefore, the characteristic is generally indicated by a regular distribution.

In this way, the address calculating part 5, by selection of the attenuation-on menu, produces the transforming address (X, Y, Z) after weight processing with the parameter At as shown in equations (1) to (3). This enables it to produce the shape such that the farther the parameter "dist" goes away from the value Rc, the more it is attenuated.

At this time, if the parameter Rc is set to the value "0", in the address calculating part 5, the parameter At becomes the maximum value (the value "1") at the center CX and CY, and the parameter At is set so that the value reduces as the wave goes away from the center CX and CY.

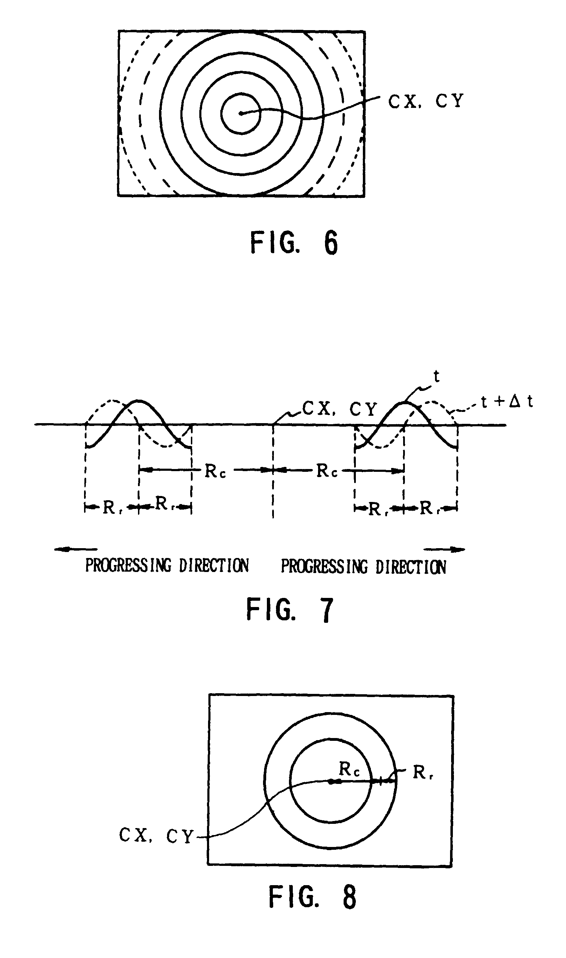

In this way, as shown in Figs. 5 and 6, a ripple, such that the farther the wave goes away from the center CX and CY, the more the amplitude is attenuated, can be produced.

If the value Rr is set to a large number, the wave is produced with little attenuation when the wave goes away from the center CX and CY. Thus, the same effect as the case when the parameter At is set to the value "1" can be obtained.

On the contrary, if the value Rr is set to a small number, the wave, having radical attenuation when the wave goes away from the center CX and CY, is produced. Thus, the value Rr can be set to a desired value so as to produce a realistic ripple.

In this way, in the image transforming apparatus 1, by setting the parameter At and having the value of phase P switched for each field unit, an animation such that the waves go away from the center CX and CY, or the waves come up to the center CX and CY, is produced.

(2-3) Production of wave swinging at only specific position

On the contrary, if the operator sets the parameter Rc to a value other than the value "0" as shown in Fig. 7, the address calculating part 5 produces a shape, in accordance with the equation (4), such that the parameter At rises to a value "1" like a concentric circle in the position which has a distance Rc from the center CX and CY.

At this time, if the operator sets the value Rr to a smaller value than the parameter Rc, in the address calculating part 5, the parameter At falls in the area determined by the value Rr with the position, which has distance Rc from the center CX and CY, being centered so that the wave can be formed in the predetermined area of the input image data DI determined by the value Rr or Rc, as shown in Fig. 8.

Accordingly, in the image transforming apparatus 1, similarly to the case shown in Fig. 2 described above, the phase P is set for each field of the input image in the address calculating part 5, and the arithmetic operations of equations (1) to (5) are performed using this phase P so as to form the swinging wave in only a portional area of a concentric circle for the input image data DI. Thus, this makes operation easier.

(2-4) Production of wave progressing with undetermined width

On the contrary to this, if the operator selects the mode of progressive wave, the address calculating part 5 sequentially inputs the speed of the progressive wave and the initial value of the value Rc.

Further, the address calculating part 5, when the command of key frame is inputted, sequentially updates the value Rc from the initial value. Therefore, a wave, which progresses such as to go farther from the center CX and CY, or a wave which approaches to the center CX and CY, is formed.

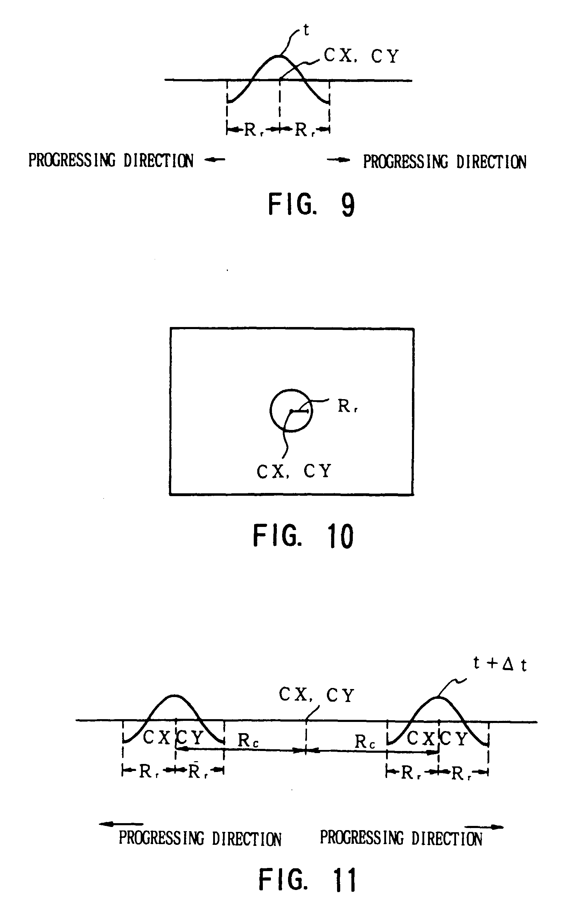

That is, as shown in Figs. 9 and 10, if the value "0" is inputted as the initial value of the value Rc, the address calculating part 5 sets the parameter At to raise the value to a value "1" in the center CX and CY from the equation (4), and to drop the value in the area which has the distance Rr from the center CX and CY.

Thus, in the image transforming apparatus 1, the shape is formed such that the wave rises in the only area having the distance Rr from the center CX and CY at the beginning, and the mapping processing is executed to this shape.

Furthermore, in the address calculating part 5, the value is updated based on the speed of the progressive wave inputted by the operator, and then the shape is formed for each field of the input image continuously.

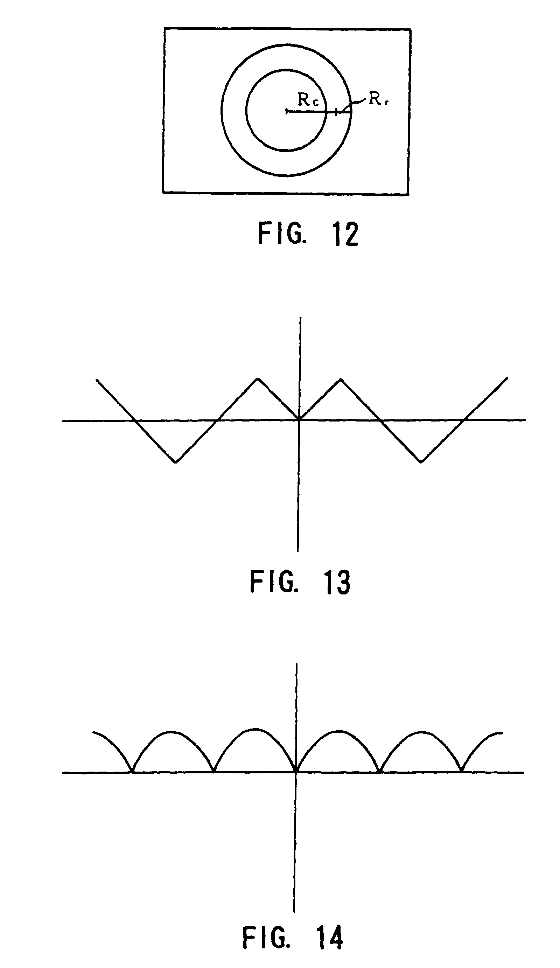

Therefore, as shown in Figs. 11 and 12, in the image transforming apparatus 1, the area that the parameter At rises, complying with time passage, can be extended to its circumference like a concentric circle.

At this time, in the address calculating part 5, the phase P is detected on the basis of the progressive wave speed, and the arithmetic operations of equations (1) to (3) are executed by using this phase P.

Therefore, in the image transforming apparatus 1, a progressive wave, which extends to its circumference and like a concentric circle and in the area determined by the value Rr along with time passage, can be produced.

At this time, by setting a arbitrary value other than "0" as the initial value of Rc, a traveling wave is produced to extend from the area determined by the value Rc to the circumference.

Further, by setting the update processing of the phase P and the value Rc to its inverse, a progressive wave progressing to the center CX and CY from the circumference is produced.

With this above construction, an offset value, which changes in a sine-wave shape in accordance with the distance from the center, is obtained. And then, when the input address is added to this offset value and the transforming address is produced, this offset value is weight-processed so that the standard position, the range, etc. of this weight-processing are switched, producing variable ripples. Thus, ease of operation of the image transforming apparatus 1 can be obtained.

Note that the embodiments discussed above have dealt with the case where the offset value, which changes in a sine-wave shape in accordance with the distance from the center, is produced. However, the present invention is not limited to this, but the offset value can be produced such that the value changes to a triangular-wave shape as shown in Fig. 13, or such that the absolute value of a value changing in a sine-wave shape as shown in Fig. 14 is produced as the offset value. That is, the cyclic function, that the value changes regularly in accordance with the distance from the center, is used so as to suit widely for the production of the offset value.

Furthermore, note that the embodiments described above have dealt with the case where the wave is produced like a concentric circle from the center position. However, this invention is not limited to this but, for example, a standard position may be set to the direction X or Y by a straight line, so as to produce a ripple running parallel to this standard position.

According to the above-described embodiments of the invention, an offset value, which changes like a cyclic function in accordance with the distance from a standard position, is obtained, and when the input address is added to this offset value and the transforming address is produced, this offset value is weight-processed so that the standard position, the range of this weight-processing, etc. are switched to produce various ripples. Therefore, ease of operation of the image transforming apparatus can be obtained.

**Claims**

1. An image transforming apparatus for transforming an input image into an output image such as a ripple or the like, the ripple having an amplitude and a wavelength, the apparatus being characterised by:

   means (4) for setting a central reference position ($R_c$) of the ripple;
   means (4) for setting an attenuation range ($R_r$) defining a radial portion of said ripple over which the amplitude of the ripple is to be attenuated, said attenuation range being defined with respect to said central reference position ($R_c$);

means (4) for setting an attenuation value ($A_t$), said attenuation value varying throughout said attenuation range ($R_r$) in accordance with the distance (dist) from the central reference position ($R_c$), and for weighting an offset value with the attenuation value, said offset value having a predetermined cyclic function varying in accordance with the distance (dist) from the central reference position ($R_c$);

means (5) for generating three-dimensional shape data representing the ripple, said shape data being based on transform address data produced by adding address data of the input image to the weighted offset value; and

mapping means (3) for mapping said input image onto said ripple such that the amplitude of said ripple is attenuated over the attenuation range ($R_r$) in accordance with said attenuation value ($A_t$).

2. An image transforming apparatus according to Claim 1, wherein said attenuation setting means sets said attenuation value ($A_t$) to a value "1" and weights said offset value with said unitary attenuation value such that said mapping means maps said input image onto a ripple having a constant amplitude throughout said attenuation range ($R_r$).

3. An image transforming apparatus according to Claim 1 or Claim 2, wherein said attenuation range setting means sets said attenuation range to an annular portion of said input image, said attenuation value setting means sequentially switches the phase of said offset value for each field or frame of said input image and said mapping means maps said input image onto said ripple such that only the annular portion of said output image is rippled.

4. An image transforming apparatus according to Claim 1, wherein said attenuation range setting means sets said attenuation range to a constant value, said generating means generates said three dimensional shape data by moving sequentially said central reference position for each frame or field of said input image and said mapping means maps said input image onto said ripple such that movement of said ripple is synchronised with the movement of said central reference position.

5. An image transforming apparatus according to Claim 1, wherein said central reference position setting means sets said central reference position to the centre of said input image, said attenuation range setting means sets said attenuation range to the whole area of said input image and said mapping means maps said input image onto said ripple such that the amplitude of the ripple increases or decreases as the ripple approaches or retreats from, respectively, the central reference position.

6. An image transforming apparatus according to claim 1, comprising switching means for switching between a first operation mode and a second operation mode wherein:

in said first operation mode, said attenuation value setting means weights said offset value with an attenuation value that varies throughout said attenuation range ($R_r$) in accordance with the distance (dist) from the central reference position ($R_c$) and said mapping means maps said input image onto said ripple such that the amplitude of the ripple changes gradually in accordance with the distance from the central reference position, and

in said second operation mode, said attenuation value setting means weights said offset value with an attenuation value that is set to "1" and said mapping means maps said input image onto said ripple such that the amplitude of the ripple is constant throughout the attenuation range.

7. An image transforming apparatus according to any of Claims 1 to 6, wherein said mapping means comprises an image storing memory (2) for storing said input image, a means for generating an inverse mapping function (6) based on said three dimensional shape data and a means for reading said input image from each address position in the input image memory corresponding to each address position of the ripple in accordance with the inverse mapping function and for outputting the input image.

**Patentansprüche**

1. Bildtransformationsvorrichtung zur Transformierung eines Eingangsbildes in ein Ausgangsbild, beispielsweise eine kleine Welle oder dgl., wobei die kleine Welle eine Amplitude und eine Wellenlänge hat, wobei die Vorrichtung gekennzeichnet ist durch:

eine Einrichtung (4) zum Vorgeben einer zentralen Referenzposition ($R_c$) der kleinen Welle;

eine Einrichtung (4) zum Vorgeben eines Dämpfungsbereichs ($R_r$), der einen Radialbereich der kleinen Welle festlegt, über welchem die Amplitude der kleinen Welle zu dämpfen ist, wobei der Dämpfungsbereich in bezug auf die zentrale Referenzposition ($R_c$) festgelegt ist;

eine Einrichtung (4) zum Vorgeben eines Dämpfungswertes ($A_t$), wobei der Dämpfungswert im gesamten Dämpfungsbereich ($R_r$) in Abhängigkeit von dem Abstand (dist) von der zentralen Referenzposition ($R_c$) sich ändert, und zum Wichten eines Offset-Wertes mit dem Dämpfungswert, wobei der Offset-Wert eine vorgegebene periodische Funktion hat, die in Abhängigkeit vom Abstand (dist) von der zentralen Referenzposition ($R_c$) sich ändert;

eine Einrichtung (5) zum Erzeugen von dreidimensionalen Formdaten, die die kleine Welle darstellen, wobei die Formdaten auf Transformationsadreßdaten basieren, die durch Hinzufügen von Adreßdaten des Eingangsbildes zum gewichteten Offset-Wert erzeugt werden; und

eine Kartiereinrichtung (3) zum Kartieren des Eingangsbildes auf die kleine Welle, so daß die Amplitude der kleinen Welle über dem Dämpfungsbereich ($R_r$) in Abhängigkeit vom Dämpfungswert ($A_t$) gedämpft wird.

2. Bildtransformationsvorrichtung nach Anspruch 1, wobei die Dämpfungsvorgabeeinrichtung den Dämpfungswert ($A_t$) auf einen Wert "1" vorgibt und den Offset-Wert mit dem einheitlichen Dämpfungswert wichtet, so daß die Kartiereinrichtung das Eingangsbild auf eine kleine Welle wichtet, die eine konstante Amplitude im gesamten Dämpfungsbereich ($R_r$) hat.

3. Bildtransformationsvorrichtung nach Anspruch 1 oder 2, wobei die Dämpfungsbereichs-Vorgabeeinrichtung den Dämpfungsbereich in bezug auf einen ringförmigen Bereich des Eingangsbildes vorgibt, die Dämpfungswert-Vorgabevorrichtung aufeinanderfolgend die Phase des Offset-Wertes für jedes Feld oder Rahmen des Eingangsbildes umschaltet und die Kartiereinrichtung das Eingangsbild auf die kleine Welle kartiert, so daß nur der ringförmige Bereich des Ausgangsbildes gewellt ist.

4. Bildtransformationsvorrichtung nach Anspruch 1, wobei die Dämpfungsbereichs-Vorgabeeinrichtung den Dämpfungsbereich auf einen konstanten Wert vorgibt, die Erzeugungseinrichtung die dreidimensionalen Formdaten erzeugt, indem aufeinanderfolgend die zentrale Referenzposition für jeden Rahmen oder Teilbild des Eingangsbildes verschoben wird, und die Kartiereinrichtung das Eingangsbild auf die kleine Welle kartiert, so daß die Verschiebung der kleinen Welle mit der Verschiebung der zentralen Referenzposition synchronisiert ist.

5. Bildtransformationsvorrichtung nach Anspruch 1, wobei die zentrale Referenzpositions-Vorgabeeinrichtung die zentrale Referenzposition in bezug auf die Mitte des Eingangsbildes vorgibt, die Dämpfungsbereichs-Vorgabeeinrichtung den Dämpfungsbereich auf den gesamten Bereich des Eingangsbildes vorgibt und die Kartiereinrichtung das Eingangsbild auf die kleine Welle kartiert, so daß die Amplitude der kleinen Welle ansteigt oder abnimmt, wenn sich die kleine Welle der zentralen Referenzposition nähert beziehungsweise davon entfernt.

6. Bildtransformationsvorrichtung nach Anspruch 1, die eine Umschalteinrichtung aufweist, um zwischen einem ersten Betriebsmodus und einem zweiten Betriebsmodus umzuschalten, wobei:

im ersten Betriebsmodus die Dämpfungswert-Vorgabeeinrichtung den Offset-Wert mit einem Dämpfungswert wichtet, der im gesamten Dämpfungsbereich ($R_r$) in Abhängigkeit vom Abstand (dist) von der zentralen Referenzposition ($R_c$) sich ändert, und die Kartiereinrichtung das Eingangsbild auf die kleine Welle kartiert, so daß die Amplitude der kleinen Welle sich allmählich in Abhängigkeit vom Abstand von der zentralen Referenzposition ändert, und

im zweiten Betriebsmodus die Dämpfungswert-Vorgabeeinrichtung den Offset-Wert mit einem Dämpfungswert wichtet, der auf "1" eingestellt ist, und die Kartiereinrichtung das Eingangsbild auf die kleine Welle kartiert, so daß die Amplitude der kleinen Welle im gesamten Dämpfungsbereich konstant ist.

7. Bildtransformationsvorrichtung nach einem der Ansprüche 1 bis 6, wobei die Kartiereinrichtung einen bild-speichernden Speicher (2) aufweist, um das Eingangsbild zu speichern, eine Einrichtung, um eine inverse Kartierfunktion (6) auf der Basis der dreidimensionalen Formdaten zu erzeugen, und eine Einrichtung, um das Eingangsbild aus jeder Adreßposition im Eingangsbildspeicher entsprechend jeder Adreßposition der kleinen Welle in Abhängigkeit von der inversen Kartierfunktion zu lesen und um das Eingangsbild auszugeben.

**Revendications**

1. Appareil de transformation d'image permettant de transformer une image d'entrée en une image de sortie telle qu'une ondulation, ou analogue, l'ondulation ayant une amplitude et une longueur d'onde, l'appareil étant caractérisé par :

un moyen (4) servant à fixer une position de référence centrale ($R_c$) de l'ondulation ;

un moyen (4) servant à fixer un intervalle d'atténuation ($R_r$) définissant une partie radiale de ladite ondulation sur laquelle l'amplitude de l'ondulation doit être atténuée, ledit intervalle d'atténuation étant définie par rapport à ladite position de référence centrale ($R_c$) ;

un moyen (4) servant à fixer une valeur d'atténuation ($A_t$), ladite valeur d'atténuation variant sur tout ledit intervalle d'atténuation ($R_r$) en fonction de la distance (dist) à la position de référence centrale ($R_c$) et à pondérer une valeur de décalage avec la valeur d'atténuation, ladite valeur de décalage ayant une fonction cyclique prédéterminée qui varie en fonction de la distance (dist) à la position de référence centrale ($R_c$) ;

un moyen (5) servant à produire des données de forme tridimensionnelles représentant l'ondulation, lesdites données de forme étant basées sur des données d'adresse de transformation produites par addition de données d'adresse de l'image d'entrée à la valeur de décalage pondérée; et

un moyen de cartographie (3) servant à cartographier ladite image d'entrée sur ladite ondulation de façon que l'amplitude de ladite ondulation soit atténuée sur l'intervalle d'atténuation ($R_r$) en fonction de ladite valeur d'atténuation ($A_t$).

2.  Appareil de transformation d'image selon la revendication 1, où ledit moyen de fixation d'atténuation fixe ladite valeur d'atténuation ($A_t$) à une valeur "1" et pondère ladite valeur de décalage avec ladite valeur d'atténuation unitaire de façon que ledit moyen de cartographie cartographie ladite image d'entrée sur une ondulation ayant une amplitude constante sur tout ledit intervalle d'atténuation ($R_r$).

3.  Appareil de transformation d'image selon la revendication 1 ou 2, où ledit moyen de fixation d'intervalle d'atténuation fixe ledit intervalle d'atténuation à une partie annulaire de ladite image d'entrée, ledit moyen de fixation de valeur d'atténuation fait séquentiellement commuter la phase de ladite valeur de décalage pour chaque trame ou image complète de ladite image d'entrée, et ledit moyen de cartographie cartographie ladite image d'entrée sur ladite ondulation de façon que seule la partie annulaire de ladite image de sortie soit ondulée.

4.  Appareil de transformation d'image selon la revendication 1, où ledit moyen de fixation d'intervalle d'atténuation fixe ledit intervalle d'atténuation à une valeur constante, ledit moyen de production produit lesdites données de forme tridimensionnelles en déplaçant séquentiellement ladite position de référence centrale pour chaque image complète ou trame de ladite image d'entrée, et ledit moyen de cartographie cartographie ladite image d'entrée sur ladite ondulation de façon que le mouvement de ladite ondulation soit synchronisé avec le mouvement de ladite position de référence centrale.

5.  Appareil de transformation d'image selon la revendication 1, où ledit moyen de fixation de position de référence centrale fixe ladite position de référence centrale au centre de ladite image d'entrée, ledit moyen de fixation d'intervalle d'atténuation fixe ledit intervalle d'atténuation à toute l'aire de ladite image d'entrée, et ledit moyen de cartographie cartographie ladite image d'entrée sur ladite ondulation de façon que l'amplitude de l'ondulation augmente ou diminue lorsque l'ondulation s'approche ou s'écarte, respectivement, de la position de référence centrale.

6.  Appareil de transformation d'image selon la revendication 1, comprenant un moyen de commutation pour commuter entre un premier mode de fonctionnement et un deuxième mode de fonctionnement où :

dans ledit premier mode de fonctionnement, ledit moyen de fixation de valeur d'atténuation pondère ladite valeur de décalage avec une valeur d'atténuation qui varie sur tout ledit intervalle d'atténuation ($R_r$) en fonction de la distance (dist) à la position de référence centrale ($R_c$), et ledit moyen de cartographie cartographie ladite image d'entrée sur ladite ondulation de façon que l'amplitude de l'ondulation varie graduellement en fonction de la distance à la position de référence centrale, et

dans ledit deuxième mode de fonctionnement, ledit moyen de fixation de valeur d'atténuation pondère ladite valeur de décalage avec une valeur d'atténuation qui est fixée à "1", et ledit moyen de cartographie cartographie ladite image d'entrée sur ladite ondulation de façon que l'amplitude de l'ondulation soit constante sur tout l'intervalle d'atténuation.

7.  Appareil de transformation d'image selon l'une quelconque des revendications 1 à 6, où ledit moyen de cartographie comprend une mémoire (2) de stockage d'image servant à stocker ladite image d'entrée, un moyen servant à produire une fonction de cartographie inverse (6) basée sur lesdites données de forme tridimensionnelles, et un moyen servant à lire ladite image d'entrée à chaque position d'adresse de la mémoire d'image d'entrée qui correspond à chaque position d'adresse de l'ondulation en fonction de la fonction de cartographie inverse et délivrer l'image d'entrée.

CONT — 4

A CAL — 5

I M C CAL — 6

3 DO

DI

II MEM — M PROC

2 1

FIG. 1

t    t + Δt

A

CX, CY

← PROGRESSING DIRECTION    PROGRESSING DIRECTION →

FIG. 2

FIG. 3

FIG. 4

FIG. 5

FIG. 6

FIG. 7

$R_c$

$R_r$

$R_r$

$R_c$

$R_r$

$R_r$

CX, CY

$t$

$t + \Delta t$

PROGRESSING DIRECTION    PROGRESSING DIRECTION

FIG. 8

$R_c$

$R_r$

CX, CY

PROGRESSING DIRECTION ← ____ → PROGRESSING DIRECTION

## FIG. 9

## FIG. 10

PROGRESSING DIRECTION    PROGRESSING DIRECTION

## FIG. 11

FIG. 12

FIG. 13

FIG. 14